# EUROPEAN PATENT APPLICATION

(11) **EP 4 060 541 A1**
(43) Date of publication of application: **21.09.2022**
(21) Application number: 21162471.3
(22) Date of filing: 14.03.2021
(51) Int. Cl.: G06F 21/62, H04L 9/32, H04L 29/06

(54) **SECURELY SHARING DIGITAL ASSETS IN A PEER-TO-PEER NETWORK**

(71) Applicant: Sokrut, Igor, 38471 Eischott (DE)
(72) Inventor: Sokrut, Igor, 38471 Eischott (DE)
(74) Representative: Meyer zu Bexten, Elmar

(57) **Abstract**

**Problem**

In the automotive industry for instance, the authoring of a material card may involve acquiring ample measurement data indicative of various strengths, Poisson's ratio, Young's modulus, shear modulus, fatigue, creep, elasticity, or resilience, to name but a few. This process calls for both costly metrology equipment and skilled technicians armed with specialist expertise. As a result, a structural-mechanical material card, though typically only a small text file no larger than one megabyte, may easily cost more than € 100,000. Material cards therefore represent a highly valued link between real world and simulation. Yet their protection against unauthorized use presents a challenge to the data owner, who often struggles to control by whom and to what extent the data is accessed. The resulting risk of losing valuable intellectual property massively complicates the exchange of data between development partners; even within an organization, this issue frequently gives rise to controversy.

In view of the above, the generation of complex material data by independent database providers is in most cases unprofitable. As a result, commercial material databases, despite requiring expensive annual subscription fees, typically offer only standard data sheets rather than more sophisticated, functionally dependent characteristics and quality indicators such as a validation status. Consequently, numerous companies and research institutes compile their own high-quality material cards, thus recreating essentially the same data over and over.

**Solution**

Method of securely sharing digital assets in a peer-to-peer network, characterized in that
the assets are maintained collaboratively between multiple contributors participating in the network,
contributions committed by each contributor are linked to a blockchain on the network,
the assets are accessed exclusively by means of a predetermined application and, upon use of the assets through the software, the contributors are identified by means of the blockchain and awarded compensation for the respective contributions.

## Description

### Technical Field

The invention relates to the process and products as per the preamble of the independent claims.

### Background Art

In engineering, structural analysis is the determination of the effects of loads on physical structures and their components by computing deformations, internal forces, stresses, support reactions, accelerations, and stability. The results of the analysis are typically used to verify the structure's fitness for use by means of simulation, often precluding physical tests. To solve the differential equations arising in the analysis of geometrically complex structures, numerical approximation as per the finite element method (cf. NPL1) is commonly employed.

In a traditional modeling software such as NASTRAN (cf. NPL2) based on punched cards, structural elements are defined on connection cards, each connection card referring to a property card that gives the cross-sectional properties of the respective element. The property card in turn refers to a so-called material card that represents the mechanical properties of the element's material. In pertinent modern applications, the term "material card" has prevailed to describe a dataset representative of such material properties (cf. PTL1).

Material cards are part of the so-called input file. The input file describes the whole simulation model and is the main input for a numerical simulation software ("solver") such as Abaqus, PamCrash, LSDyna, Radioss, Autoform, or the above-mentioned NASTRAN. The material properties are generally defined independently of the solver, however each solver requires its own specific material cards. Therefore, material cards for different solvers can be derived from the same measurements of material properties. In principle, material cards combine measurement data with the constitutive equations derived from an analysis of continuum mechanics. However, material cards are equally useful in disciplines beyond structural analysis, such as computational fluid dynamics (CFD), electromagnetic, thermal, acoustic, or multi-body simulations (MBS).

### Summary of invention

The invention is set out in the appended set of claims.

### Technical Problem

In, for instance, the automotive industry, the authoring of a material card may involve acquiring ample measurement data indicative of various strengths, Poisson's ratio, Young's modulus, shear modulus, fatigue, creep, elasticity, plasticity, or resilience, to name but a few, and all these properties can change with temperature, strain rate, moisture etc. This process calls for both costly metrology equipment and skilled technicians, material modeling experts armed with specialist expertise and a lot of time to create. As a result, a structural-mechanical material card for instance, though typically only a small text file no larger than one megabyte, may easily cost more than € 100,000. Material cards therefore constitute a highly valued link between real world and simulation. Yet their protection against unauthorized use presents a challenge to the data owner, who often struggles to control by whom and to what extent the data is accessed. The resulting risk of losing valuable intellectual property massively complicates the exchange of data between development partners; even within an organization, this issue frequently gives rise to controversy.

In view of the above, the generation of complex material data by independent database providers is in most cases unprofitable. As a result, commercial material databases, despite requiring annual subscription fees, typically offer only standard data sheets rather than more sophisticated, functionally dependent characteristics and quality indicators such as a validation status. Consequently, numerous companies and research institutes compile their own high-quality material cards, thus recreating essentially the same data over and over.

### Solution to Problem

The problem is solved by a value network in which a dataset is created in collaboration, such as between multiple companies, and then made available for use throughout the network by means of a blockchain. The originator of each piece of data - that is, added value being generated - is automatically remunerated for every usage of the respective part or the entire dataset.

### Advantageous effect of invention

According to what might be termed a zero-knowledge principle, the invention permits the use of a material card or similar digital asset without disclosing that asset *as such* to the end user, hence mitigating the risk of unauthorized proliferation and intellectual property theft. The data sovereignty, data excellence, and data security thus achieved permit an asset's authors, editors, or auditors to capitalize on their individual contributions according to a pay-per-use model.

### Brief description of drawings

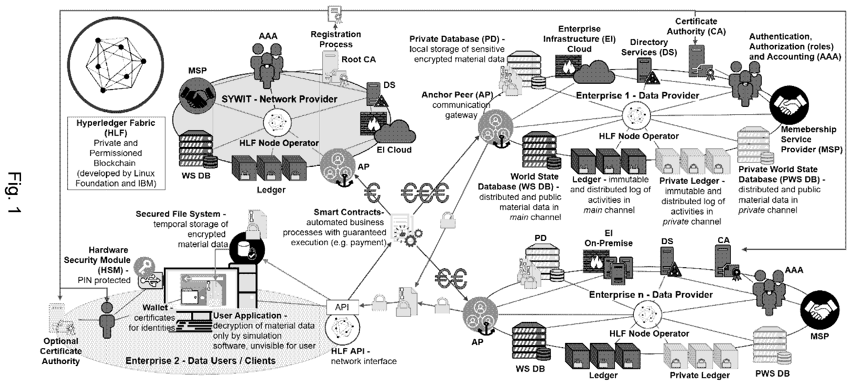

The sole figure depicts a peer-to-peer network as per the invention.

### Description of embodiments

The drawing shows an embodiment based on the Hyperledger Fabric (HLF) framework (cf. NPL3). Here, a network provider ("SYWIT^{®}") operates a private root certificate authority (root CA). A first enterprise acting as a data provider is registered with said root CA via an intermediate certificate authority (CA) which, in conjunction with an associated local membership service provider (MSP), handles that organization's authentication, authorization (roles), and accounting (AAA). The enterprise further operates at least one HLF peer node hosting an encrypted private database (PD) and instance of the ledger, world state database (WS DB), and chaincode (not depicted).

In the example at hand, the WS DB refers to a digital asset containing sensitive material data stored locally in the enterprise's PD, each contribution to said asset being linked to the blockchain. To use the data, a client in a second enterprise, via an optional certificate authority, registers with the root CA to obtain a digital identity consisting of a certificate and associated private key, saving the latter in a PIN-protected hardware security module (HSM). The certificate, which contains the corresponding public key, is stored - for instance, pursuant to PKCS #11 - in an HLF wallet and associated with the HSM holding the private counterpart.

Through a communication gateway in the form of a designated anchor peer among the first enterprise's nodes, the client's user application, using the identity in the wallet, may now retrieve the asset of interest for the purpose of structural analysis or simulation. In this case, the encrypted material data, while normally being retained only by its contributors, is downloaded by the application and cached - that is, temporarily stored - in a cryptographically secured filesystem accessible exclusively by the solver that retrieves the data from the filesystem. The ensuing decryption of the data rests with the simulation software and takes place in working memory without any presentation of the data to the user.

A simulation model may comprise one or more input files, which are combined to form an assembly of the model. In a vehicle crash simulation for instance, so-called dummies are commonly employed, the development of which is exceptionally complex and calls for substantial expertise to reflect the true biomechanics of human bodies. Any component of these simulation models should be shareable across the network. Such components may take the form of individual segments of an input file that describe, for example, a specific interaction among structural members or a specific type of failure at certain spot welds. Likewise, they may consist of entire input files, such as those describing the behavior of a special dummy.

When the software uses the shared simulation model, e.g., the material data, the contributors are identified by means of the blockchain and awarded compensation for their respective contribution, be it authoring, editing, or sharing experience gained from the use of the asset. As part of an automated business process with guaranteed execution, this payment transaction is governed by a smart contract packaged in so-called HLF chaincode that manages the world state. In the present embodiment, such contribution could include the acquisition of measurement data indicative of the material properties, improvement of said data by redundant measurement, or processing of the data such as by averaging. A contribution may also take the form of manual validation based on plausibility considerations, the building or adapting of a numerical model for the intended analysis, or an actual simulation and verification of the results thus obtained.

In an alternative embodiment beyond numerical simulation, the invention could be adopted to the sharing of software extensions built, for example, using specific application programming interfaces of existing software packages. Suitable applications could range from a simple spreadsheet extension to the enhancement of a software suite for computer-aided design (CAD) or automation of complex workflows, permitting contributors and users to exchange and license such applications via the blockchain network according to a pay-per-use model. This way, plug-ins for various software would be easily accessible and automatically billable.

A similar approach could be applied to exchange pre-trained computational models such as artificial neural networks (ANNs). In an effort known as federated learning, a first party could initially train an ANN and make it available to a second party on the network, who would then train it further. A third party might modify the trained model, perhaps by creating a derivative of it. Subsequently, the ANNs would be offered for use in the network according to the pay-per-use model, with all parties involved in the value creation being automatically remunerated by smart contracts upon usage.

Following up on the previous embodiment, an ANN pretrained for image recognition could be downloaded to a contributor's smartphone and further refined using images stored on the phone - without uploading those images at any point. A second contributor could validate the ANN using different images. Eventually, the trained ANN would be released to the network and each contributor paid either one-time or on a per-use basis.

### Industrial applicability

The invention is applicable, among others, throughout the automotive and mechanical engineering, aerospace and defense, industrial equipment, energy, consumer products, construction, healthcare, materials, chemicals, and other high-tech industries.

### Citation list

The following documents are cited hereinbefore.

### Patent literature

PTL1: JP 2009223718 A (FUJITSU LTD) 01.10.2009

### Non-patent literature

NPL1: TURNER, M. Jon, et al. Stiffness and deflection analysis of complex structures. Journal of theAeronautical Sciences. 1956, vol.23, no.9, p.805-823.

NPL2: MCCORMICK, Caleb W. The NASTRAN User's Manual. Scientific and Technical Information Office, National Aeronautics and Space Administration. 1970.

NPL3: ANDROULAKI, Elli, et al. Hyperledger Fabric: A Distributed Operating System for Permissioned Blockchains. Proceedings of the thirteenth EuroSys conference. 2018, p.1-15.

## Claims

1. Method of securely sharing digital assets in a peer-to-peer network, **characterized in that**
the assets are maintained collaboratively between multiple contributors participating in the network,
contributions committed by each contributor are linked to a blockchain on the network,
the assets are accessed exclusively by means of a predetermined application and,
upon use of the assets through the software, the contributors are identified by means of the blockchain and awarded compensation for the respective contributions.

2. Method as per Claim 1
**characterized in that**
the assets are preferably encrypted and retained by the contributors and, prior to use, each asset is downloaded by the application and cached in a cryptographically secured filesystem accessible exclusively by the application.

3. Method as per Claim 1 or Claim 2
**characterized in that**
the contributions encompass authoring the assets, editing the assets, verifying and validating the assets, or sharing experience gained from the use of the assets.

4. Method as per any of the preceding claims
**characterized in that**
the compensation is governed by a smart contract deployed on the blockchain and,
upon the use of the assets, the application invokes the contract.

5. Method as per Claim 4
**characterized in that**
the blockchain is based upon a permissioned ledger, such as Hyperledger Fabric, distributed across the network,
the current assets constitute business objects defining a world state of the ledger,
the contributions and compensation constitute transactions which update the state,
and
the state is managed by chaincode containing the smart contract governing the transactions.

6. Method as per Claim 5
**characterized in that**,
per an endorsement policy associated with the chaincode, a network provider, prior to the updating of the state, validates each transaction, such as by executing and signing the transaction.

7. Method as per Claim 6
**characterized in that**,
prior to the committing of contributions, each contributor, preferably via an intermediate certificate authority, registers with a private root certificate authority associated with the network provider.

8. Method as per Claim 7
**characterized in that**
local membership service providers associate each contributor with a data provider organization, such as an enterprise, operating peer nodes of the network, each peer node hosting a preferably encrypted private database and an instance of the ledger, world state, and chaincode.

9. Method as per Claim 8
**characterized in that**,
prior to the use of the assets, a client, preferably via an optional certificate authority, registers with the root certificate authority, obtaining a digital identity comprising a certificate and associated private key,
the client stores at least the certificate in a wallet accessible by the application, and,
to retrieve the assets, the application authenticates the client vis-a-vis the peer nodes by means of the certificate.

10. Method as per Claim 9
**characterized in that**
the client stores the private key in a preferably PIN-protected hardware security module, for example, pursuant to PKCS #11, and
the wallet associates the certificate with the hardware security module.

11. Method as per any of Claim 8 through Claim 10
**characterized in that**
the peer nodes establish a private channel within the network and maintain a private ledger through the channel.

12. Method as per any of the preceding claims
**characterized in that**
the assets comprise properties of a material e.g. mechanical, electrical, thermal, fluidic, hydromechanical, acoustic, biomechanical, recyclability and sustainability etc. or interaction properties between two materials such as friction, adhesion, etc. such as represented by a material card,
the application comprises a numerical analysis of a system, such as a finite element analysis, and
the contributions include at least one of the following:
acquiring measurement data indicative of the properties,
improving the data by redundant measurement,
processing the data such as by averaging,
generation of solver-specific material cards, e.g. by linking measurement data with constitutive equations,
verifying the data such as by plausibility considerations,
validating the data such as by measurements at specimen level,
validating the data such as by measurements at component level,
based on the data, building or adapting a numerical model for the analysis, or
obtaining and verifying results of a simulation of the model.

13. Data processing apparatus comprising means for carrying out the method as per any of the preceding claims.

14. Computer program comprising instructions which, when the program is executed by a computer, cause the computer to carry out the method any of Claim 1 through Claim 12.

15. Data carrier signal carrying the program of Claim 14.
